# EUROPEAN PATENT SPECIFICATION

(11) **EP 2 944 817 B1**
(45) Date of publication and mention of the grant of the patent: **25.10.2017**
(21) Application number: 14772686.3
(22) Date of filing: 06.03.2014
(51) Int. Cl.: F04B 23/10, F04B 23/12, F04B 1/26, F04B 1/29, F04B 1/32, F04B 49/00, F04B 49/08, F04B 49/22, F15B 11/16, G05D 16/20

(54) **PUMP DISCHARGE FLOW-RATE CONTROL DEVICE**
VORRICHTUNG ZUR STEUERUNG DER PUMPENENTLADUNGSFLUSSRATE
DISPOSITIF DE RÉGULATION DE DÉBIT DE DÉCHARGE DE POMPE

(30) Priority: 27.03.2013 JP 2013066836
(43) Date of publication of application: 18.11.2015
(73) Proprietor: KYB Corporation, Tokyo 105-6111 (JP)
(72) Inventor: AOYAMA, Atsushi, Tokyo 105-6111 (JP)
(74) Representative: Grünecker Patent- und Rechtsanwälte PartG mbB
(86) International application number: PCT/JP2014/055738
(87) International publication number: WO 2014/156532

(56) References cited:
- EP-A1- 0 877 168
- EP-A1- 1 099 856
- JP-A- H 094 568
- JP-A- H 094 568
- JP-A- H0 348 066
- JP-A- H0 533 776
- JP-A- 2002 070 749
- JP-A- 2002 323 002
- JP-A- 2008 291 731
- JP-A- 2008 291 731
- US-B1- 6 658 843

## Description

### TECHNICAL FIELD

The present invention relates to a pump discharge flow-rate control device adapted to control a discharge flow rate of a variable capacity pump.

### BACKGROUND ART

A variable capacity pump rotationally driven by an engine is used for a driving pressure source of hydraulic equipment mounted on a working machine such as a hydraulic excavator or the like.

JP2008-291731A discloses a pump discharge flow-rate control device provided with a regulator which controls a discharge flow rate of a variable capacity pump, a resistor interposed in a signal pressure passage through which a discharge pressure of a constant capacity pump is led, and an actuator which drives the regulator in accordance with a differential pressure before and after the resistor.

The pump discharge flow-rate control device is configured such that a discharge flow rate of the variable capacity pump is not changed even if a pump rotation speed fluctuates by adjustment by the actuator operated in accordance with a differential pressure before and after a resistor of the discharge flow rate of the variable capacity pump through the regulator. Further prior art is known from documents JP H 094568 A and JP 2008 291731 A.

### SUMMARY OF INVENTION

In a working machine such as a hydraulic excavator and the like, ensuring of operability of the working machine by increasing a gain (change rate) of the pump discharge flow rate with respect to a pump rotation speed (rotation speed of an engine) is required during an operation from a low rotation speed zone to an intermediate rotation speed zone of the engine. On the other hand, during the operation from the intermediate rotation speed to a high rotation speed zone of the engine, decrease of the gain of the pump discharge flow rate with respect to the pump rotation speed is required so as to maintain work efficiency of the working machine.

The present invention has an object to provide a pump discharge flow-rate control device in which the change rate (gain) of the pump discharge flow rate is switched in accordance with a rise in a pump rotation speed.

According to one aspect of the present invention, a pump discharge flow-rate control device for controlling a discharge flow rate of a variable capacity pump in accordance with a control pressure adjusted by a regulator is provided. The pump discharge flow-rate control device includes a constant capacity pump driven by a common driving source with the variable capacity pump, a resistor interposed in a signal pressure passage through which a working fluid discharged from the constant capacity pump flows, and a control pressure actuator configured to lower the control pressure by driving the regulator in accordance with a rise in a differential pressure before and after the resistor. The resistor includes a fixed throttle and a check valve interposed in the signal pressure passage in parallel with each other. The check valve includes a seat interposed in the signal pressure passage, a poppet arranged on a downstream side of the seat, and a spring configured to press the poppet to the seat. The object is solved by the subject matter of claim 1.

### BRIEF DESCRIPTION OF DRAWINGS

Fig. 1 is a hydraulic circuit diagram of a pump discharge flow-rate control device according to an embodiment of the present invention.
Fig. 2 is a sectional view of the pump discharge flow-rate control device according to the embodiment of the present invention.
Fig. 3 is a characteristic chart illustrating a relationship of a controlled flow rate and an LS differential pressure to a pump rotation speed according to the embodiment of the present invention.

### DESCRIPTION OF EMBODIMENTS

A pump discharge flow-rate control device 1 according to an embodiment of the present invention will be explained by referring to the attached drawings.

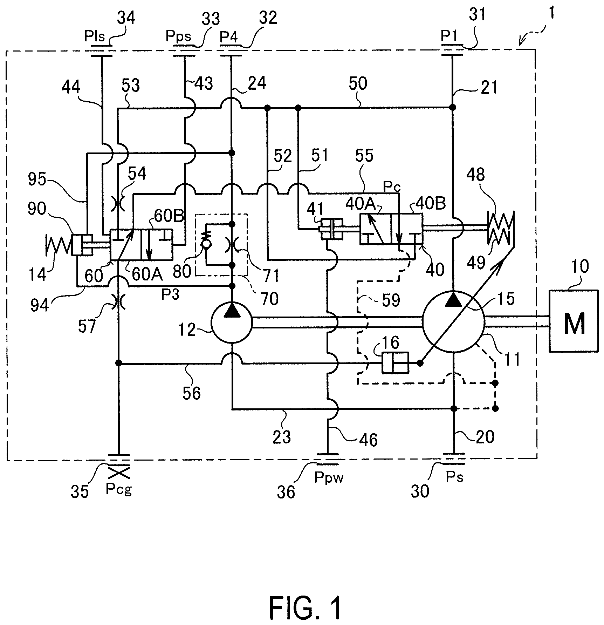

The pump discharge flow-rate control device 1 illustrated in Fig. 1 is provided on a driving pressure source of hydraulic equipment mounted on a hydraulic excavator and controls a discharge flow rate of a variable capacity pump 11.

For the variable capacity pump 11, a swash-plate type piston pump, for example, is used, and a discharge capacity (pump displacement volume) is adjusted in accordance with a tilted angle of a swash plate 15.

The variable capacity pump 11 is driven by an engine 10, sucks a working oil from a tank port 30 connected to a tank (not shown) through a sucking passage 20, and discharges the working oil pressurized by a piston (not shown) reciprocating while following the swash plate 15 to a discharge passage 21.

The working oil discharged from the variable capacity pump 11 is fed to a pump port 31 through the discharge passage 21 and distributed to each of hydraulic cylinders driving a boom, an arm or a bucket of the hydraulic excavator and the like by a control valve (not shown) connected to the pump port 31. The control valve adjusts a flow rate of the working oil supplied to each of the hydraulic cylinders by an operation of an operator.

In the pump discharge flow-rate control device 1, a constant capacity pump 12 is juxtaposed with the variable capacity pump 11. For the constant capacity pump 12, a gear pump, for example, is used. The constant capacity pump 12 is driven by the engine 10 together with the variable capacity pump 11.

The constant capacity pump 12 sucks the working oil through a sucking passage 23 branching from the sucking passage 20 and discharges the pressurized working oil to a signal pressure passage 24.

The working oil discharged from the constant capacity pump 12 is fed to a signal pressure port 32 through the signal pressure passage 24 and is supplied to a hydraulic driving portion and the like which switches the control valve through a signal pressure passage (not shown) connected to the signal pressure port 32.

For a working fluid supplied to/discharged from the variable capacity pump 11 and the constant capacity pump 12, a working oil (oil) is used. A working fluid such as a water-soluble fluid water-soluble alternative liquid, for example, may be used instead of the working oil.

Subsequently, a configuration of the pump discharge flow-rate control device 1 adapted to control the discharge flow rate of the variable capacity pump 11 will be explained.

The variable capacity pump 11 includes a cylinder block (not shown) rotationally driven by the engine 10, the piston reciprocating in the cylinder of the cylinder block and discharging the sucked working oil, the swash plate 15 followed by the piston, horsepower control springs 48 and 49 urging the swash plate 15 in a direction to increase a tilting angle thereof, and a tilting actuator 16 for driving the swash plate 15 against the urging forces of the horsepower control springs 48 and 49. When the tilting angle of the swash plate 15 is changed by an operation of the actuator 16, a stroke length of the piston reciprocating while following the swash plate 15 is changed, and the discharge capacity of the variable capacity pump 11 is changed.

In the pump discharge flow-rate control device 1, a load sensing regulator 60 for adjusting a control pressure Pcg led by the tilting actuator 16 (hereinafter referred to simply as a "regulator 60") and a horsepower control regulator 40 for adjusting a working oil pressure (control pressure) Pc led by the regulator 60 are provided.

The tilting actuator 16 makes the tilting angle of the swash plate 15 small when the control pressure Pcg adjusted by the horsepower control regulator 40 and the regulator 60 rises and decreases the discharge capacity of the variable capacity pump 11.

In a second control pressure passage 56 having the regulator 60 and the tilting actuator 16 communicate with each other, a throttle 57 is interposed. Pressure fluctuation of the control pressure Pcg led by the tilting actuator 16 is alleviated by the throttle 57.

The horsepower control regulator 40 is a 3-port 2-position switching valve and includes a spool (not shown) moving between a position 40A and a position 40B. The urging force of the horsepower control springs 48 and 49 is applied to one end of the spool. On the other end of the spool, a discharge pressure P1 of the variable capacity pump 11 led through a branch source pressure passage 51 branching from a source pressure passage 50 acts. The spool moves to a position where the discharge pressure P1 is balanced with the urging force of the horsepower control springs 48 and 49 and changes opening degrees at the positions 40A and 40B.

The horsepower control springs 48 and 49 have one ends connected to the spool and the other ends linked with the swash plate 15. A length of the horsepower control spring 49 is formed shorter than the horsepower control spring 48. The urging forces by the horsepower control springs 48 and 49 change in accordance with the tilting angle of the swash plate 15 and the position of the spool.

If the driving force by the discharge pressure P1 of the variable capacity pump 11 received by the spool is smaller than the urging forces of the horsepower control springs 48 and 49, the spool moves in a direction to be switched to the position 40B. At the position 40B, since a first control pressure passage 55 connected to the regulator 60 communicates with a low-pressure passage 59 connected to the tank, the working oil pressure Pc of the first control pressure passage 55 lowers.

On the other hand, if the driving force by the discharge pressure P1 of the variable capacity pump 11 received by the spool is larger than the urging forces of the horsepower control springs 48 and 49, the spool moves in a direction to be switched to the position 40A. At the position 40A, since the first control pressure passage 55 connected to the regulator 60 communicates with a branch source pressure passage 52 to which the discharge pressure P1 is led, the working oil pressure Pc of the first control pressure passage 55 rises.

As described above, the horsepower control regulator 40 adjusts the working oil pressure Pc led by the regulator 60 so that the driving force by the discharge pressure P1 is balanced with the urging forces of the horsepower control springs 48 and 49. Even if the pump rotation speed becomes high, the control pressure Pcg led by the tilting actuator 16 by the operation of the horsepower control regulator 40 with the rise of the discharge pressure P1 is raised and thus, the discharge capacity of the variable capacity pump 11 decreases. A load (work rate) of the variable capacity pump 11 is adjusted so as to become substantially constant regardless of the pump rotation speed.

Moreover, a horsepower control pressure actuator 41 is provided on the horsepower control regulator 40. The horsepower control pressure actuator 41 responds to a horsepower control signal pressure Ppw led through a horsepower control signal pressure passage 46 from a horsepower control signal pressure port 36.

A control system of the hydraulic excavator is switched to a high load mode and a low load mode. The horsepower control signal pressure Ppw is lowered in the high load mode and raised in the low load mode. If the horsepower control signal pressure Ppw is raised in the low load mode, the spool of the horsepower control regulator 40 moves in a direction to be switched to the position 40A. Thus, the working oil pressure Pc rises, and the load of the variable capacity pump 11 lowers.

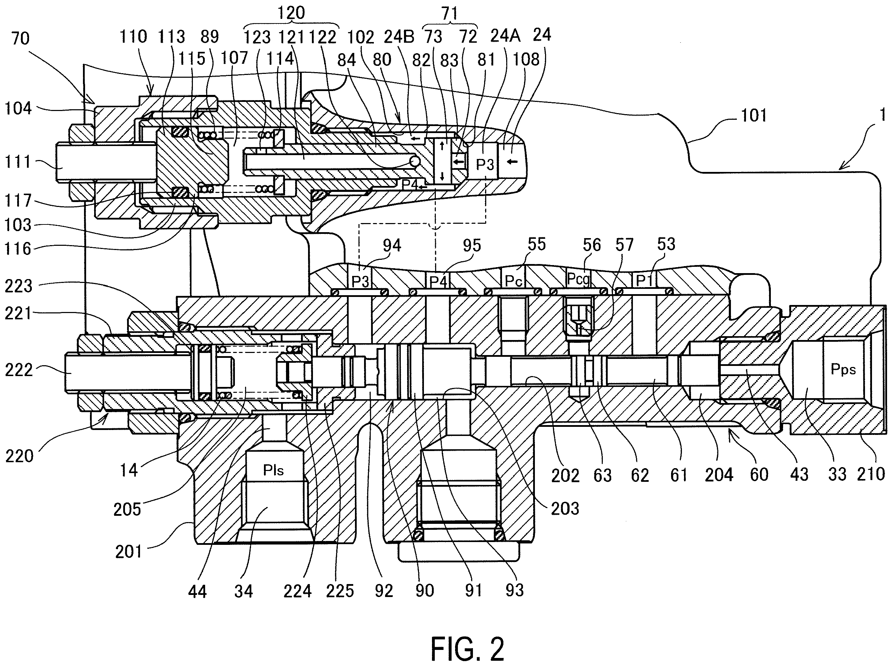

The regulator 60 is a 3-port 2-position switching valve and is provided with a spool 61 (see Fig. 2) moving between a position 60A and a position 60B. A signal pressure Pps generated on an upstream side of the control valve on the basis of the discharge pressure P1 is led to one end of the spool 61 through a signal passage 43 from a signal port 33. To the other end of the spool 61, a signal pressure P1s generated on a downstream side of the control valve on the basis of a load pressure of the hydraulic cylinder is led through a signal passage 44 from a signal port 34. Moreover, the urging force of an LS spring 14 is applied to the other end of the spool 61. The spool 61 moves to a position where the LS differential pressure (Pps - P1s) generated before and after the control valve, a differential pressure (P3 - P4) before and after a resistor 70 which will be described later, and the urging force of the LS spring 14 acting on the other end of the spool 61 are balanced.

If a load of each of the hydraulic cylinders and the like driving the boom, the arm, and the bucket is large, for example, the signal pressure (load pressure) P1s led to the signal port 34 from the downstream side (load side) of the control valve rises. When the LS differential pressure (Pps-P1s) becomes small due to the rise of the signal pressure P1s, as illustrated in Fig. 1, the spool 61 is held at the position 60A by the urging force of the LS spring 14. Since the first control pressure passage 55 connected to the horsepower control regulator 40 communicates with the second control pressure passage 56 connected to the tilting actuator 16 at the position 60A, the control pressure Pcg led to the tilting actuator 16 has a value based on the working oil pressure Pc adjusted by the horsepower control regulator 40.

On the other hand, if the load of each of the hydraulic cylinders and the like driving the boom, the arm, and the bucket is small, the signal pressure (load pressure) P1s lowers. If the LS differential pressure (Pps-P1s) becomes large due to the lowering of the signal pressure P1s, the spool 61 moves in a direction to switch to the position 60B against the urging force of the LS spring 14. Since a branch source pressure passage 53 to which the discharge pressure P1 is led communicates with the second control pressure passage 56 connected to the tilting actuator 16 at the position 60B, the control pressure Pcg rises.

As described above, the regulator 60 adjusts the control pressure Pcg led to the tilting actuator 16 so that the LS differential pressure is balanced with the urging force of the LS spring 14. As a result, the discharge capacity of the variable capacity pump 11 is controlled so that the LS differential pressure (Pps - P1s) becomes substantially constant even if the load of the hydraulic cylinder increases/decreases.

A throttle 54 is interposed in the branch source pressure passage 53 so that pressure fluctuation of the discharge pressure P1 led to the regulator 60 is alleviated.

In the pump discharge flow-rate control device 1, a gain adjustment mechanism adapted to adjust to what rate the discharge flow rate of the variable capacity pump 11 is changed (increased) in accordance with the rise of the pump rotation speed in accordance with the rise of the pump rotation speed is provided. The gain adjustment mechanism is constituted by the resistor 70 interposed in the signal pressure passage 24 for leading the working oil discharged from the constant capacity pump 12 and a control pressure actuator 90 for adjusting the control pressure Pcg by driving the regulator 60 in accordance with the differential pressure (P3 - P4) before and after the resistor 70.

Fig. 2 is a sectional view illustrating the regulator 60, the control pressure actuator 90, and the resistor 70. Their specific configurations will be explained below.

The pump discharge flow-rate control device 1 is provided with a first housing 101 and a second housing 201. The first housing 101 accommodates the resistor 70. The second housing 201 accommodates the regulator 60 and the control pressure actuator 90. Not limited to that, the first housing 101 and the second housing 201 may be configured to be integrally formed.

On the second housing 201, a spool accommodating hole 202 for accommodating the spool 61 of the regulator 60 and a piston accommodating hole 203 for accommodating a piston 91 of the control pressure actuator 90 are coaxially formed.

The columnar spool 61 and the piston 91 extend coaxially with each other and are integrally formed. Not limited to that, the spool 61 and the piston 91 may be configured to be formed separately and connected to each other.

The spool 61 has a tip end portion protruding from an opening end of the spool accommodating hole 202. A pressure chamber 204 is defined between the tip end portion of the spool 61 and a plug 210 mounted on the second housing 201. To the pressure chamber 204, the signal pressure Pps generated on the upstream side of the control valve is led through the signal passage (through hole) 43 and the signal port 33 formed on the plug 210 and piping (not shown) connected to the plug 210.

The spool 61 has its movement in the right direction in Fig. 2 regulated by having its tip end brought into contact with the plug 210.

The spool 61 has a base end portion protruding from an opening end of the piston accommodating hole 203. A pressure chamber 205 is defined between the base end portion of the spool 61 and a guide sleeve 225 and a plug 221 mounted on the second housing 201. To the pressure chamber 205, the signal pressure P1s generated on the downstream side of the control valve is led through the signal passage (through hole) 44 and the signal port 34 formed on the second housing 201 and piping (not shown) connected to the second housing 201.

The guide sleeve 225 is fitted in an opening end portion of the piston accommodating hole 203. The spool 61 is slidably inserted in an inner periphery of the guide sleeve 225.

Inside the plug 221, an adjuster mechanism 220 adapted to adjust the urging force of the LS spring 14 is provided. The adjuster mechanism 220 is provided with an adjuster rod 222 screwed with the plug 221, a spring receiver 223 slidably accommodated in the plug 221, and a spring receiver 224 mounted on the base end portion of the spool 61. The coil-shaped LS spring 14 is compressed and interposed between the spring receiver 224 and the spring receiver 223. The urging force of the LS spring 14 is adjusted by changing a screwing position of the adjuster rod 222.

In the first housing 101 and the second housing 201, the above-described branch source pressure passage 53, the first control pressure passage 55, and the second control pressure passage 56 are formed. In the middle of the spool 61, a first land portion 62 and a second land portion 63 are formed. In accordance with a stroke of the spool 61, an opening degree at which the second control pressure passage 56 communicates with the branch source pressure passage 53 or an opening degree at which the second control pressure passage 56 communicates with the first control pressure passage 55 is changed.

In a state in which the spool 61 is held at the position 60A as illustrated in Fig. 2 by the urging force of the LS spring 14, since the first control pressure passage 55 communicates with the second control pressure passage 56 as described above, the control pressure Pcg has a value based on the working oil pressure Pc adjusted by the horsepower control regulator 40.

On the other hand, when the spool 61 moves in the left direction in Fig. 2 against the urging force of the LS spring 14 and is switched to the position 60B, since the branch source pressure passage 53 communicates with the second control pressure passage 56, the control pressure Pcg rises.

Subsequently, a configuration of the control pressure actuator 90 will be explained.

The control pressure actuator 90 is provided with the piston 91 driving the spool 61. The piston 91 is provided in the middle of the spool 61. The piston 91 has its outer periphery in sliding contact with an inner periphery of the piston accommodating hole 203 and divides the piston accommodating hole 203 into a first pressure chamber 92 and a second pressure chamber 93.

In the first housing 101 and the second housing 201, an upstream side control pressure communication path 94 having the first pressure chamber 92 communicate with the upstream side of the resistor 70 in the signal pressure passage 24 and a downstream side control pressure communication path 95 having the second pressure chamber 93 communicate with the downstream side of the resistor 70 in the signal pressure passage 24.

An upstream-side pressure P3 of the resistor 70 in the signal pressure passage 24 is led to the first pressure chamber 92 through the upstream side control pressure communication path 94, while a downstream-side pressure P4 of the resistor 70 is led to the second pressure chamber 93 through the downstream side control pressure communication path 95. If the differential pressure (P3 - P4) before and after the resistor 70 rises, the spool 61 moves in the right direction in Fig. 2 by the pressure difference acting on the piston 91. As a result, the opening degree of the position 60A, that is, the opening degree at which the first control pressure passage 55 communicates with the second control pressure passage 56 increases, and thus, the control pressure Pcg led to the tilting actuator 16 has a value based on the working oil pressure value Pc adjusted by the horsepower control regulator 40.

Subsequently, a configuration of the resistor 70 will be explained.

As illustrated in Fig. 1, the resistor 70 is provided with a fixed throttle 71 and a check valve 80 interposed in parallel with each other in the signal pressure passage 24.

As illustrated in Fig. 2, the check valve 80 is provided with a seat 81 provided on the signal pressure passage 24, a poppet 82 arranged on the downstream side of the seat 81, and a spring 89 for pressing the poppet 82 to the seat 81.

On the first housing 101, a poppet accommodating hole 102 accommodating the poppet 82 is formed. On one end of the poppet accommodating hole 102, the tapered seat 81 is formed.

The poppet 82 is provided with a valve body portion 83 seated on the seat 81 and a shaft 84 supporting the valve body portion 83. The valve body portion 83 is formed having a columnar shape, and a portion seated on the seat 81 is formed having a tapered shape. The shaft 84 is formed having a columnar shape having a diameter smaller than the valve body portion 83. The poppet 82 and the shaft 84 extend coaxially with each other and are formed integrally. Not limited to that, the poppet 82 and the shaft 84 may be configured to be formed separately and connected to each other.

The signal pressure passage 24 is divided by the poppet 82 seated on the seat 81 into an upstream portion 24A and a downstream portion 24B.

The upstream portion 24A communicates to a discharge port of the constant capacity pump 12 through the signal pressure passage 24 and also communicates with the first pressure chamber 92 of the control pressure actuator 90 through the upstream side control pressure communication path 94.

The downstream portion 24B communicates with the signal pressure port 32 through the signal pressure passage 24 and also communicates with the second pressure chamber 93 of the control pressure actuator 90 through the downstream side control pressure communication path 95.

The fixed throttle 71 is formed inside the poppet 82 and bypasses the poppet 82 seated on the seat 81 and has the upstream portion 24A and the downstream portion 24B communicate with each other.

The fixed throttle 71 is provided with an upstream side throttle hole 72 opened on an axis of the poppet 82 and communicating with the upstream portion 24A and a downstream side throttle hole 73 connected to the upstream side throttle hole 72 and communicating with the downstream portion 24B.

The upstream side throttle hole 72 extends in an axial direction of the poppet 82 and its upstream end is opened on a tip end surface of the valve body portion 83, while its downstream end is opened in the middle of the downstream side throttle hole 73.

The downstream side throttle hole 73 extends in a radial direction of the poppet 82 and its both ends are opened on an outer periphery of the valve body portion 83, respectively.

The working oil discharged from the constant capacity pump 12 to the signal pressure passage 24 flows from the upstream portion 24A to the downstream portion 24B through the upstream side throttle hole 72 and the downstream side throttle hole 73 as indicated by an arrow in Fig. 2.

A sectional area of the upstream side throttle hole 72 is formed smaller than a sectional area of the downstream side throttle hole 73, and a channel sectional area of the fixed throttle 71 expands in stages. As a result, disturbance in the flow of the working oil passing through the fixed throttle 71 is suppressed, and fluctuation of the differential pressure before and after the fixed throttle 71 is suppressed. The fixed throttle is not limited to the above-described configuration but may have a groove having the upstream portion 24A and the downstream portion 24B communicate with the seat 81 or the valve body portion 83, for example, formed so that a slight amount of the working oil flows between the valve body portion 83 and the seat 81 when the valve body portion 83 is seated on the seat 81.

On the first housing 101, a cylindrical guide housing 103 is mounted on the poppet accommodating hole 102. The shaft 84 is slidably supported on an inner periphery of the guide housing 103.

On the guide housing 103, an adjuster mechanism 110 adapted to adjust an urging force of the spring 89 is provided.

The adjuster mechanism 110 is provided with a spring receiver 114 mounted on a base end portion of the shaft 84, a spring receiver 113 slidably accommodated inside the guide housing 103, and an adjuster rod 111 for adjusting a position of the spring receiver 113.

The coil-shaped spring 89 is compressed and interposed between the spring receiver 113 and the spring receiver 114 and urges the shaft 84 in the axial direction.

The spring receiver 113 has a body portion 116 with which one end of the spring 89 is brought into contact and a protruding portion 115 protruding inside the spring 89 from the body portion 116. The body portion 116 and the protruding portion 115 are formed integrally. Not limited to that, the body portion 116 and the protruding portion 115 may be configured to be formed separately and connected to each other.

A groove is formed on an outer periphery of the columnar body portion 116, and an O-ring 117 is interposed in the groove. The outer periphery of the body portion 116 is slidably inserted in the inner periphery of the guide housing 103 through the O-ring 117. A spring accommodating chamber 107 as an accommodating chamber for accommodating the spring 89 is sealed from the outside by the O-ring 117.

The protruding portion 115 extends in the axial direction from the body portion 116 and is formed having a columnar shape with a diameter smaller than the body portion 116 and has its tip end opposed to the base end of the shaft 84.

The plug 104 is mounted on the guide housing 103, and the adjuster rod 111 is screwed with and mounted on the plug 104.

By changing the screwed position of the adjuster rod 111, the spring receiver 113 brought into contact with the adjuster rod 111 moves in the axial direction, and the urging force of the spring 89 is changed. As a result, an open valve pressure of the check valve 80 is changed, and thus, the timing when the check valve 80 is opened can be adjusted in accordance with the rise of the pump rotation speed.

Moreover, by changing the screwed position of the adjuster rod 111, and by having the protruding portion 115 of the spring receiver 113 brought into contact with the base end of the shaft 84, the valve body portion 83 is kept in contact with the seat 81. In this case, even if the pump rotation speed rises, the check valve 80 is not opened and thus, the differential pressure before and after the resistor 70 continues to rise at a certain rate in accordance with the rise of the pump rotation speed. That is, even if the pump rotation speed rises, a change rate of the differential pressure before and after the resistor 70 is not switched.

Not limited to the above-described configuration, the spring receiver 113 and the adjuster rod 111 may be configured to be formed integrally.

Inside the guide housing 103, the spring accommodating chamber 107 for accommodating the spring 89 is provided. The spring accommodating chamber 107 is defined between an inner wall of the guide housing 103, the spring receiver 113, and the shaft 84. The capacity of the spring accommodating chamber 107 is contracted/expanded with movement of the shaft 84 during an opening/closing operation of the poppet 82.

Inside the shaft 84, a communication path 120 having the spring accommodating chamber 107 and the downstream portion 24B communicate with each other is provided. The communication path 120 has a shaft hole 121 extending in the axial direction of the shaft 84 and a through hole 122 and a through hole 123 extending in a radial direction of the shaft 84 from the middle of the shaft hole 121. One end of the shaft hole 121 is opened in the spring accommodating chamber 107, and the other end of the shaft hole 121 communicates with the downstream portion 24B through the through hole 122. Even in a state in which the protruding portion 115 of the spring receiver 113 is brought into contact with the base end of the shaft 84 and one end of the shaft hole 121 is closed, the shaft hole 121 communicates with the spring accommodating chamber 107 through the through hole 123.

When the poppet 82 is opened, the working oil in the spring accommodating chamber 107 flows out to the downstream portion 24B through the communication path 120. When the poppet 82 is closed, the working oil in the downstream portion 24B flows into the spring accommodating chamber 107 through the communication path 120, and the poppet 82 is smoothly opened/closed.

Subsequently, an operation in which the pump discharge flow-rate control device 1 switches a gain of the discharge flow rate of the variable capacity pump 11 with respect to the pump rotation speed will be explained.

If the pump rotation speed of the constant capacity pump 12 is low, until the differential pressure before and after the fixed throttle 71 reaches a predetermined value, the check valve 80 is closed, and the differential pressure (P3 - P4) before and after the resistor 70 is generated by resistance applied by the fixed throttle 71 to the flow of the working oil. As the differential pressure before and after the resistor 70 rises in accordance with the rise of the pump rotation speed, the opening degree on the position 60A side of the regulator 60 increases and thus, the discharge flow rate of the variable capacity pump 11 increases at a predetermined rate (gain) in accordance with the rise of the pump rotation speed.

If the pump rotation speed of the constant capacity pump 12 further rises and the differential pressure before and after the fixed throttle 71 rises beyond the predetermined value, the poppet 82 is separated from the seat 81 against the urging force of the spring 89 and the check valve 80 is opened, and the working oil flows both through the channel between the poppet 82 and the seat 81 and the fixed throttle 71. As the channel area of the resistor 70 expands and the resistance applied to the flow of the working oil reduces, the rate of the change of the differential pressure before and after the resistor 70 becomes small with respect to the rise of the pump rotation speed. With that, the rate (gain) at which the discharge flow rate of the variable capacity pump 11 increases also becomes small.

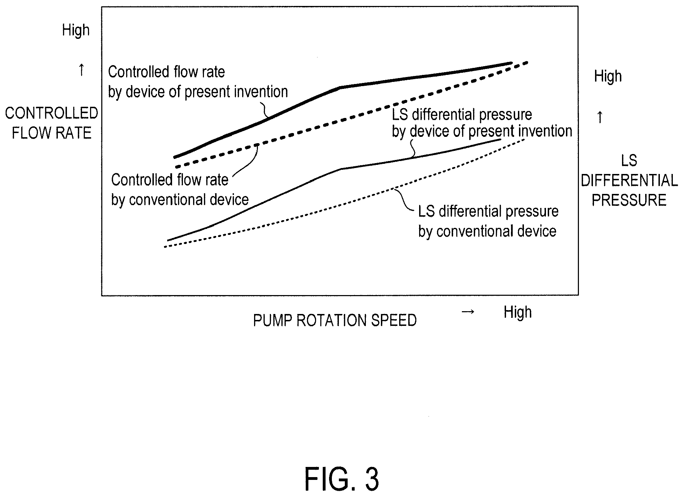

Fig. 3 is a characteristic chart illustrating a relationship of a control flow rate (discharge flow rate of the variable capacity pump 11) to the pump rotation speed and the LS differential pressure. In Fig. 3, a broken line indicates a characteristic by a conventional device, while a solid line indicates a characteristic by the pump discharge flow-rate control device 1 of the present invention. In the conventional device, since the resistor is provided only with the fixed throttle, the control flow rate and the LS differential pressure rise at a certain rate in the whole region of the pump rotation speed. On the other hand, the control flow rate and the LS differential pressure in the pump discharge flow-rate control device 1 of the present invention rise at a rate larger than that of the conventional device in a low-to-medium speed zone of the pump rotation speed in which the check valve 80 is closed and rise at a rate smaller than that of the conventional device in a medium-to-high speed zone in which the check valve 80 is opened.

According to this embodiment as above, the following working effects are exerted.

As the pump rotation speed rises, and the differential pressure before and after the fixed throttle 71 rises beyond the predetermined value, the poppet 82 is separated from the seat 81 against the urging force of the spring 89, and the check valve 80 is opened. As a result, the rate of the change of the differential pressure before and after the resistor 70 becomes small in accordance with the rise of the pump rotation speed, and the rate of the increase of the discharge flow rate of the variable capacity pump 11 is changed to become small in accordance with the rise of the pump rotation speed.

As a result, in the pump low-to-medium rotation speed zones, the change of the discharge flow rate of the variable capacity pump 11 with respect to the change of the pump rotation speed is increased, whereby operability of the working machine according to the pump rotation speed is ensured. On the other hand, in the pump medium-to-high rotation speed zone, the change of the discharge flow rate of the variable capacity pump 11 with respect to the change of the pump rotation speed is decreased, whereby work efficiency of the working machine is maintained.

Since the fixed throttle 71 is formed inside the poppet 82, there is no need to form a fixed throttle in the first housing 101 accommodating the poppet 82, and a simple structure is provided, and the size of the resistor 70 can be reduced.

The fixed throttle 71 has the upstream side throttle hole 72 opened in the poppet 82 and communicating with the upstream side of the seat 81 in the signal pressure passage 24 and the downstream side throttle hole 73 connected to the upstream side throttle hole 72 and communicating with the downstream side of the seat 81 in the signal pressure passage 24, and since the sectional area of the upstream side throttle hole 72 is formed smaller than the sectional area of the downstream side throttle hole 73, generation of disturbance in the flow of the working oil passing through the fixed throttle 71 is suppressed, and the differential pressure before and after the fixed throttle 71 can be made stable.

The poppet 82 has the valve body portion 83 seated on the seat 81 of the signal pressure passage 24 and the shaft 84 supporting the valve body portion 83, and the spring accommodating chamber 107 accommodating the spring 89 urging the shaft 84 in the axial direction and the communication path 120 having the downstream side of the seat 81 in the signal pressure passage 24 communicate with the spring accommodating chamber 107 are provided, by leading the working oil pressure on the downstream side of the seat 81 in the signal pressure passage 24 to the spring accommodating chamber 107, fluctuation in the working oil pressure generated on the upstream side of the seat 81 is prevented from being led to the spring accommodating chamber 107, whereby the opening degree of the poppet 82 is made stable.

Since the adjuster rod 111 adapted to be displaced in the axial direction of the poppet 82 and to adjust the urging force of the spring 89 is provided, and the adjuster rod 111 moves to a position where a valve opening operation of the poppet 82 is regulated, by means of adjustment by the adjuster rod 111 of the valve opening pressure of the poppet 82, the pump rotation speed which can switch the increase rate of the discharge flow rate of the variable capacity pump 11 can be changed. Moreover, by means of regulation by the adjuster rod 111 of the valve opening operation of the poppet 82, operability of the working machine according to the pump rotation speed can be obtained without switching of the change rate of the discharge flow rate of the variable capacity pump 11.

Embodiments of the present invention were described above, but the above embodiments are merely examples of applications of the present invention, and the technical scope of the present invention is defined by the subject-matter of the appended patent claims.

This application claims priority based on Japanese Patent Application No. 2013-66836 filed with the Japan Patent Office on March 27, 2013.

## Claims

1. A pump discharge flow-rate control device (1) for controlling a discharge flow rate of a variable capacity pump in accordance with a control pressure adjusted by a regulator, said pump discharges flow-rate control device (1) comprising:
a variable capacity pump (11) configured to change a discharge flow rate in accordance with a control pressure (Pcg);
a regulator (60) configured to adjust the control pressure (Pcg);
a constant capacity pump (12) driven by a common driving source (10) with the variable capacity pump (11);
a resistor (70) interposed in a signal pressure passage (24) through which a working fluid discharged from the constant capacity pump (12) flows; and
a control pressure actuator (90) configured to lower the control pressure (Pcg) by driving the regulator (60) in accordance with a rise in a differential pressure before and after the resistor (70),
**characterized in that**
the resistor (70) includes a fixed throttle (71) and a check valve (80) interposed in the signal pressure passage (24) in parallel with each other,
the check valve (80) includes:
a seat (81) interposed in the signal pressure passage (24);
a poppet (82) arranged on a downstream side of the seat (81); and
a spring (89) configured to press the poppet (82) to the seat (81),
the fixed throttle (71) has:
an upstream side throttle hole (72) opened in the poppet (82) and communicating with an upstream side of the seat (81) in the signal pressure passage (24); and
a downstream side throttle hole (73) connected to the upstream side throttle hole (72) and communicating with a downstream side of the seat (81) in the signal pressure passage (24), and
a sectional area of the upstream side throttle hole (72) is formed smaller than a sectional area of the downstream side throttle hole (73).

2. The pump discharge flow-rate control device (1) according to claim 1, wherein
the fixed throttle (71) is formed inside the poppet (82).

3. The pump discharge flow-rate control device (1) according to claim 1, wherein
the poppet (82) has:
a valve body portion (83) seated on the seat (81) of the signal pressure passage (24); and
a shaft (84) which supports the valve body portion (83); wherein
the pump discharge flow-rate control device (1) further comprises:
an accommodating chamber (107) which accommodates the spring (89) configured to urge the shaft (84) in an axial direction; and
a communication path (120) having a downstream side of the seat (81) in the signal pressure passage (24) communicate with the accommodating chamber (107).

4. The pump discharge flow-rate control device (1) according to claim 1, further comprising:
an adjuster rod (111) configured to be displaced in an axial direction of the poppet (82) and to adjust an urging force of the spring (89), wherein
the adjuster rod (111) configured to move to a position where a valve opening of the poppet (82) is regulated.

## Patentansprüche

1. Steuerungsvorrichtung (1) für Pumpen-Durchflussleistung zur Steuerung der Durchflussleistung einer Regelpumpe entsprechend einem durch einen Regler eingestellten Regeldruck, wobei die Steuerungsvorrichtung (1) für Pumpen-Durchflussleistung umfasst:
eine Regelpumpe (11), die gestaltet ist, eine Durchflussleistung entsprechend einem Regeldruck (Pcg) zu ändern;
einen Regler (60), der gestaltet ist, den Regeldruck (Pcg) einzustellen;
eine nicht verstellbare Pumpe (12), die durch eine gemeinsame Antriebsquelle (10) mit der Regelpumpe (11) angetrieben wird;
einen Widerstand (70), der in einen Signaldruckdurchgang (24), durch den ein von der nicht verstellbaren Pumpe (12) abgegebenes Arbeitsfluid strömt; gelegt ist; und
ein Regeldruckstellelement (90), das gestaltet ist, den Regeldruck (Pcg) zu senken, indem der Regler (60) entsprechend einem Anstieg eines Differenzdrucks vor und nach dem Widerstand (70) angesteuert wird,
**dadurch gekennzeichnet, dass**
der Widerstand (70) eine fest eingestellte Drosselklappe (71) und ein Rückschlagventil (80) umfasst, die in dem Signaldruckdurchgang (24) parallel zueinander vorgesehen sind,
wobei das Rückschlagventil (80) umfasst:
einen Sitz (81), der in dem Signaldruckdurchgang (24) vorgesehen ist;
ein auf- und abgehendes Ventil (82), das auf einer stromabwärts liegenden Seite des Sitzes (81) eingerichtet ist; und
eine Feder (89), die gestaltet ist, das auf- und abgehende Ventil (82) auf den Sitz (81) zu drücken, wobei die fest eingestellte Drosselklappe (71) aufweist:
eine stromaufwärtsseitige Drosselklappenöffnung (72), die in dem auf- und abgehenden Ventil (82) geöffnet ist und mit einer stromaufwärts liegenden Seite des Sitzes (81) im Signaldruckdurchgang (24) in Verbindung steht; und
eine stromabwärtsseitige Drosselklappenöffnung (73), die mit der stromaufwärtsseitigen Drosselklappenöffnung (72) verbunden ist und mit einer stromabwärts liegenden Seite des Sitzes (81) im Signaldruckdurchgang (24) in Verbindung steht, und
eine Querschnittsfläche der stromaufwärtsseitigen Drosselklappenöffnung (72) kleiner ausgebildet ist als eine Querschnittsfläche der stromabwärtsseitigen Drosselklappenöffnung (73).

2. Steuerungsvorrichtung (1) für Pumpen-Durchflussleistung nach Anspruch 1, wobei
die fest eingestellte Drosselklappe (71) im Innern des auf- und abgehenden Ventils (82) ausgebildet ist.

3. Steuerungsvorrichtung (1) für Pumpen-Durchflussleistung nach Anspruch 1, wobei
das auf- und abgehende Ventil (82) aufweist:
einen Ventilkörperteil (83), der auf dem Sitz (81) des Signaldruckdurchgangs (24) sitzt; und
eine Welle (84), die den Ventilkörperteil (83) trägt; wobei
die Steuerungsvorrichtung (1) für Pumpen-Durchflussleistung des Weiteren umfasst:
eine Aufnahmekammer (107), welche die Feder (89) aufnimmt, die gestaltet ist, die Welle (84) in einer axialen Richtung zu drücken; und
einen Verbindungsweg (120) mit einer stromabwärts liegenden Seite des Sitzes (81) in dem Signaldruckdurchgang (24), der mit der Aufnahmekammer (107) in Verbindung steht.

4. Steuerungsvorrichtung (1) für Pumpen-Durchflussleistung nach Anspruch 1, des Weiteren umfassend:
einen Reglerstab (111), der gestaltet ist, in einer axialen Richtung des auf- und abgehenden Ventils (82) verschoben zu werden und eine Druckkraft der Feder (89) einzustellen, wobei
der Reglerstab (111) gestaltet ist, sich zu einer Position zu bewegen, in der eine Ventilöffnung des auf- und abgehenden Ventils (82) geregelt wird.

## Revendications

1. Dispositif de régulation de débit de décharge de pompe (1) permettant de réguler un débit de décharge d'une pompe à capacité variable conformément à une pression de régulation ajustée par un régulateur, ledit dispositif de régulation de débit de décharges de pompe (1) comprenant:
une pompe à capacité variable (11) configurée pour changer un débit de décharge conformément à une pression de régulation (Peg);
un régulateur (60) configuré pour ajuster la pression de régulation (Peg);
une pompe à capacité constante (12) entraînée par une source d'entraînement commune (10) avec la pompe à capacité variable (11);
une résistance (70) interposée dans un passage de pression de signal (24) à travers lequel s'écoule un fluide de travail déchargé depuis la pompe à capacité constante (12); et
un actionneur de pression de régulation (90) configuré pour abaisser la pression de régulation (Peg) en entraînant le régulateur (60) en fonction d'une augmentation de pression différentielle avant et après la résistance (70),
**caractérisé en ce que**
la résistance (70) comprend un étrangleur fixe (71) et un clapet anti-retour (80) interposé dans le passage de pression de signal (24) parallèlement l'un à l'autre,
le clapet anti-retour (80) comprend:
un siège (81) interposé dans le passage de pression de signal (24);
un clapet de ventilation (82) agencé sur un côté aval du siège (81); et
un ressort (89) configuré pour comprimer le clapet de ventilation (82) contre le siège (81),
l'étrangleur fixe (71) possède:
un orifice d'étranglement latéral en amont (72) ouvert dans le clapet de ventilation (82) et
en communication avec un côté amont du siège (81) dans le passage de pression de signal (24); et
un trou d'étranglement côté aval (73) relié au trou d'étranglement côté amont (72) et communiquant avec un côté aval du siège (81) dans le passage de pression de signal (24), et
une zone transversale du trou d'étranglement côté amont (72) est de conception plus petite qu'une zone transversale du trou d'étranglement côté aval (73).

2. Dispositif de régulation de débit de refoulement de la pompe (1) selon la revendication 1, dans lequel
l'étrangleur fixe (71) est formé à l'intérieur du clapet de ventilation (82).

3. Dispositif de régulation de débit de refoulement de la pompe (1) selon la revendication 1, dans lequel
le clapet de ventilation (82) possède:
une partie de corps de soupape (83) assise sur le siège (81) du passage de pression de signal (24); et
un arbre (84) qui supporte la partie de corps de soupape (83);
dans lequel
le dispositif de régulation de débit de refoulement de la pompe (1) comprend en outre:
une chambre de logement (107) permettant de loger le ressort (89) configuré pour repousser l'arbre (84) dans une direction axiale; et
un trajet de communication (120) ayant un côté en aval du siège (81) dans le passage de pression de signal (24) communique avec la chambre de logement (107).

4. Dispositif de régulation de débit de refoulement de la pompe (1) selon la revendication 1, comprenant en outre:
une tige de réglage (111) configurée pour se déplacer dans une direction axiale du clapet de ventilation (82) et pour régler une force de poussée du ressort (89), dans lequel la tige de réglage (111) est configurée pour se déplacer vers une position où une ouverture de soupape du clapet de ventilation (82) est régulée.
